# EUROPÄISCHE PATENTSCHRIFT

(11) **EP 3 379 237 B1**
(45) Veröffentlichungstag und Bekanntmachung des Hinweises auf die Patenterteilung: **05.10.2022**
(21) Anmeldenummer: 18000285.9
(22) Anmeldetag: 21.03.2018
(51) Int. Cl.: G01N 23/20025, G01N 3/08, G01N 3/22, G01N 23/046

(54) **PROBENMANIPULATOR ZUR ROTIERENDEN ZUG- ODER DRUCKBEANSPRUCHUNG SOWIE ENTSPRECHENDES VERFAHREN**
SAMPLE MANIPULATOR FOR ROTATING TENSILE OR COMPRESSIVE STRESS AND CORRESPONDING METHOD
MANIPULATEUR D'ÉCHANTILLONS PERMETTANT LA SOLLICITATION À LA TRACTION OU À LA COMPRESSION PAR LA ROTATION AINSI QUE PROCÉDÉ CORRESPONDANT

(30) Priorität: 25.03.2017 DE 102017003005
(43) Veröffentlichungstag der Anmeldung: 26.09.2018
(73) Patentinhaber: Kammrath & Weiss GmbH, 44141 Dortmund (DE)
(72) Erfinder: Kammrath, Waldemar, 44328 Dortmund (DE)
(74) Vertreter: DTS Patent- und Rechtsanwälte Schnekenbühl und Partner mbB

(56) Entgegenhaltungen:
- DE-A1-102010 017 455
- JP-A- H05 223 756
- JP-A- 2001 153 821
- US-A- 5 948 994
- MOSTAFIJUR RAHMAN K M ET AL: "In Situ 3D Synchrotron Imaging of Failure Processes in Engineering Materials", JOURNAL OF PHYSICS: CONFERENCE SERIES, INSTITUTE OF PHYSICS PUBLISHING, BRISTOL, GB, Bd. 425, Nr. 13, 22. März 2013 (2013-03-22), Seite 132004, XP020243048, ISSN: 1742-6596, DOI: 10.1088/1742-6596/425/13/132004

## Beschreibung

Die Erfindung befasst sich mit einem Probenmanipulator gemäß dem Oberbegriff des Anspruches 1 und mit einem CT-Verfahren gemäß dem Oberbegriff des Anspruches 9. Dabei wird eine Materialprobe unter Zug- oder Druckkräften mittels geeigneter Aufnahmemittel, insbesondere Mittel zur Schichtenaufnahme erfasst, Probenmanipulatoren, wie beispielsweise CT-Probentische, ermöglichen es, in-situ in einer Computer-Tomographie-Vorrichtung, kurz CT-Vorrichtung, im µ- und sub-µ-Bereich Druck- und Zuguntersuchungen vorzunehmen. Dabei werden entsprechende Schichtaufnahmen an der Materialprobe vorgenommen, die dabei permanent in der CT-Vorrichtung verbleibt. Je nach Ausführungsform sind auch Temperierungen des Probenmaterials und/oder des Probenraumes möglich. Weiterhin ist e s üblich, 3D-Aufnahmen von den Strukturen des Probenmaterials vorzunehmen, insbesondere 3D-Aufnahmen oder Abbilder von den inneren Strukturen des Probenmaterials unter den in-situ aufgeprägten physikalischen und/oder chemischen Testbedingungen.

Mit Blick auf die vorliegende Erfindung ist die physikalische Art des Computer-Tomographie-Verfahrens, kurz CT-Verfahren, unerheblich, ebenso wie die zugehörige Erfassungsvorrichtung aus dem jeweils charakteristischen Strahlungs- und/oder Wellenemitter und der zugehörigen Detektionseinheit. Als zentrales Merkmal des Verfahrens und der Vorrichtung ist anzusehen, dass die Materialprobe beim CT-Verfahren relativ zur Erfassungsvorrichtung um eine Hochachse in diskreten im µ-Bereich oder im Nanobereich liegenden Schritten rotierbar ist. Daher ist nachfolgend durchgängig ein µCT-Verfahren oder µCT-Vorrichtung gemeint, auch wenn vereinfachend nur ein CT-Verfahren und/oder eine CT-Vorrichtung genannt wird.

Die vorgenannten CT -Verfahren und entsprechende CT-Vorrichtungen sind dem Grund nach im Stand der Technik bekannt. Beispielsweise offenbaren JP05223756 A, DE 40 39 098 A1 oder JP-2001153821 A CT-Vorrichtungen, bei denen die feststehende Materialprobe von einer Röntgenröhre-Detektor-Vorrichtung erfasst wird, welche bei den Aufnahmen um diese Materialprobe herum rotiert. Dabei werden die Materialproben in-situ unter Aufprägung einer kontinuierlich ansteigenden und überwachten Zugkraft oder Druckkraft beobachten. In der Regel wird diese Untersuchung vorgenommen, bis es zur Materialschädigung kommt.

Aus der DE 10 2007 001 928 B4 ist eine Vorrichtung bekannt, bei der die Röntgenröhre und die zugeordnete Detektoreinheit feststehen, zwischen denen eine einen Drehtisch aufweisende Untersuchungseinheit angeordnet ist. Mit diesem Drehtisch ist eine Belastungseinheit in Form eines Jochs verbunden, über die Druckkräfte auf eine eingespannte Materialprobe aufgeprägt werden können.

Mostafijur Rahman K M et al. "In Situ 3D Synchrotron Imaging of Failure Processes in Engineering Materials", JOURNAL OF PHYSICS: CONFERENCE SERIES, INSTITUTE OF PHYSICS PUBLISHING, BRISTOL, Bd. 425, Nr. 13, 22. März 2013, Seite 132004 ff., XP020243048, ISSN: 1742-6596, DOI: 10.1088/1742-6596/425/13/132004, offenbart einen Probenmanipulator zum Anlegen von Zugkräften auf eine Probe zur Messung in einer CT, wobei die Probe über einen gekoppelten Drehmechanismus an beiden Seiten gleichmäßig rotiert werden kann und insbesondere Torsionkräfte vermieden werden.

Aus der US 2014/0161223 A1 ist ebenfalls eine Vorrichtung bekannt, mittels welcher ein Probenmaterial in einem Detektionsstrahl, bspw. einem Röntgenstrahl in einem begrenzten Winkelbereich um eine vertikale Hochachse gedreht werden kann. Bei der US 2014/0161223 A1 ist das Probenmaterial in zwei Greifköpfen eingespannt, die in Achsrichtung linear zueinander verfahrbar sind. Die Greifköpfe und das Probenmaterial sind weiterhin in einer kugelartigen Kapsel aus zwei Halbschalen eingebracht, wobei zwischen den beide Halbschalen ein von einem Erfassungsstrahl durchleuchtbarer Inspektionsring angeordnet ist. Auf das Probenmaterial kann über die Greifköpfe eine lineare Zugkraft aufgebracht und durch Rotation der Gesamtanordnung in einem gewissen Winkelbereich auch Aufnahmen des Probenmaterials in unterschiedlichen Winkellagen vorgenommen werden.

Dabei ist es nachteilig, wenn die gesamte Erfassungseinheit um die Materialprobe rotieren muss, wie bei einer medizinischen MRS- oder Röntgen-CT-Untersuchung am lebenden Menschen. Weiterhin ist es bei stehenden CT-Vorrichtungen ungünstig und stellt letztendlich eine unvollständigen Datenlage dar, wenn nicht inspizierte Schattenbereiche verbleiben, weil die Materialprobe aus konstruktiven Gründen nur um geringe Winkelbereiche gedreht werden kann, die deutlich unterhalb von 360° liegen. Eine vollständige 3D-Strukturabbildung der Materialprobe ist dann kaum möglich. Die Aufgabe der Erfindung besteht somit darin, eine CT-Vorrichtung und ein CT-Verfahren zur Verfügung zu stellen, um eine Materialprobe in-situ vollumfänglich erfassbar zu untersuchen.

Dies wird erfindungsgemäß mit einem Probenmanipulator nach Anspruch 1 gelöst. Weiterhin wird ein entsprechendes CT-Verfahren nach Anspruch 9 aufgezeigt.

Der erfindungsgemäße Probenmanipulator dient zur rotierenden Zug- oder Druckbeanspruchung einer Materialprobe, insbesondere bei einer computertomographischen Untersuchung. Die Materialprobe weist dabei in der Regel eine längliche Erstreckung in der Art eines Drahtes, Fadens, Haares oder Formstückes auf. Es ist ein Tragrahmen umfasst, zwei linear verfahrbare Joche, mindestens ein Antriebsmotor zum Verfahren von mindestens einem der Joche relativ zu dem anderen Joch. Es sind weiterhin zwei um eine gemeinsame Drehachse DA mittels Drehantrieben motorisch antreibbare Halte- und Zentrierköpfe zur Aufnahme und Halterung der Materialprobe vorgesehen. Die Drehantriebe sind dabei voneinander unabhängig und können bedarfsweise über eine entsprechende Steuerung zueinander synchronisiert oder gezielt in einem konstanten oder veränderlichen Winkelversatz unter Torsion der Materialprobe angetrieben werden.

Die Drehantriebe sind idealerweise Servomotoren oder elektro-magnetische Direktantriebe. Jedem Joch ist jeweils ein Halte- und Zentrierkopf zugeordnet, und mittels mindestens einer Kraftmesszelle kann die Erfassung der auf einen oder beide Halte- und Zentrierköpfe wirkenden Zug- oder Druckkräfte erfasst und datentechnisch weitergeleitet und ausgewertet werden. Zusätzlich ist die Winkellage beider Drehantriebe sensorisch erfassbar und zueinander synchronisierbar, wobei alle Antriebe und Sensoren einzeln oder gemeinsam mit einer zentralen Steuer- und Auswerteeinheit datenleitend über mindestens eine Leitung- und/oder Steckverbindung verbindbar sind. Die zentrale Steuer- und Auswerteeinheit kann also außerhalb des Probenmanipulators angeordnet sein und bspw. ein einen Computer und/oder die Steuereinheit einer CT-Vorrichtung umfassen.

Der Kern besteht darin, dass an beiden Jochen jeweils ein Drehantrieb angeordnet ist, wobei der an dem mindestens einen verfahrbaren Joch angeordnete Drehantrieb mit diesem gemeinsam in Richtung der Drehachse DA verfahrbar ist. Dabei ist der jeweils zugeordnete Halte- und Zentrierkopf derart an dem Joch oder im Drehantrieb gelagert, dass dieser ebenfalls gemeinsam mit dem Drehantrieb und dem Joch in Richtung der Drehachse DA verfahrbar und von den Drehantrieben rotierbar ist, und wobei mittels der beiden Drehantriebe auch die beiden Halte- und Zentrierköpfe und insb eine dort angeordnete Materialprobe mindestens um 180°, insbesondere ein oder mehrmalig um 360° um eine Drehachse (DA) drehbar und parallel tordierbar ist.

Die Materialprobe kann bei der in-situ Beobachtung mit bis zu 10 kN belastet werden.

Bei üblichen Materialuntersuchungen wird die Probe mit bis zu 5 kN belastet. Dabei kann die Verfahrgeschwindigkeit unter Zug- oder Druckkräften stufenlos und variabel gesteuert verstellt werden. Die Verfahrgeschwindigkeit liegt idealerweise im Bereich von 0,1 µm/sec und 20µm/sec.

Der Antriebsmotor zum linearen Verfahren der Joche ist idealerweise ein Gleichstrommotor, auf welchem nachgeschaltet ein Untersetzungsgetriebe aufgebracht ist. Die der Materialprobe aufgeprägte Kraft wird beispielsweise an einer Anzeigeeinheit in Newton (N) angezeigt.

Hierbei ist es möglich, die auf die Halte- und Zentrierköpfe bzw. die eingespannte Materialprobe wirkenden Zug- oder Druckkräfte in-situ in einer zusammenhängenden Messung oder Messfolge kontinuierlich von maximalem Zug durch Null-Belastung hindurch, bis zu maximalem Druck und zurück durchfahren zu können. Der Probenmanipulator ermöglicht dabei insbesondere, dass durch die synchronisierten Drehantriebe die Materialprobe um 360° gedreht wird. Diese Drehung um 360° kann absolut torsionsfrei oder unter definierter Torsion bis zu 10 Nm erfolgen.

Der Probenmanipulator wird mit einer zentralen Steuer- und Auswerteeinheit gesteuert, in der Regel einem PC, wobei ein geregeltes Messen in Abhängigkeit von der aufgebrachten Kraft in einer Steuerungssoftware integriert sein kann.

Durch die Lage und Form des Kraftrahmens, der von den beiden Jochen und den verbindenden Doppelspindelabschnitten gebildet wird, wird eine extreme Steifigkeit der Apparatur erreicht. Somit werden Fehlmessung durch Eigenfederung oder Verformung der Apparatur vermieden und jede Wegänderung korreliert mit der Verformung der Materialprobe.

Ein Vorteil der erfindungsgemäßen Vorrichtung besteht darin, dass beide Joche und somit auch die beiden jeweils dort angeordneten Drehantriebe der Halte- und Zentrierköpfe linear zueinander in Richtung der Drehachse verfahrbar sind.

Bei einer Ausgestaltung sind die beiden Joche jeweils an zwei Spindeln angeordnet, die durch mindestens einen Antriebsmotor um die jeweils eigene Längsachse (LA) drehbar angetrieben werden können. Dabei treibt die Drehung der Spindeln mindestens ein Joch, insbesondere beide Joche an. An oder in den Jochen sind die zu den Doppelspindeln entsprechend geeigneten Gegenlager oder Gegengewinde angeordnet. Bei dieser Ausführungsform, spannen die Drehachse der Halte- und Zentrierköpfe und die Längsachsen der Spindeln idealerweise eine gemeinsame Ebene auf, bzw. liegen in einer gemeinsamen vertikalen Ebene. Hierbei sind insbesondere alle Achsen zueinander parallel und die Drehachse der Halte- und Zentrierköpfe ist mittig und parallel zu den beiden Längsachsen der Spindeln.

Ein besonders vorteilhafte Ausgestaltung besteht darin, dass die beiden Joche jeweils an zwei durch einen Antriebsmotor drehbar um die jeweils eigene Längsachse antreibbare Doppelspindeln verfahrbar sind, wobei die beiden Doppelspindeln durch nur eine Welle und geeignete Getriebeeinheiten gekoppelt und synchronisiert sind. Dabei weisen die Doppelspindeln jeweils Längenabschnitte mit gegenläufigen Gewindesteigungen aufweisen, die derart zueinander angeordnet und über die Getriebeeinheiten gekoppelt sind, dass die beiden Joche synchron aufeinander zu und voneinander weg bewegbar sind. Die Kopplung der Welle mit den Doppelspindeln kann idealerweise über selbsthemmende Schneckengetriebe erfolgen.

Vorteilhafterweise sind die Getriebeeinheiten immer so orientiert, dass die Doppelspindeln immer gegenläufige Drehungen vollziehen. Damit heben sich die Kräfte gegenseitig auf und der Tragrahmen wird entlastet.

Bei einer Ausführung sind die Drehantriebe Servomotoren mit entsprechenden Servomotorsteuerungen, wobei ein eigenständig gelagerter, separater Rotationskörper vorgesehen ist, der eine umlaufende Kodierung als Inkrementalgeber aufweist, dem wiederum ein Sensor als Erfassungseinheit zugeordnet ist. Der Servomotor ist über ein Übertragungselement, wie beispielsweise ein Zahnband oder Zahnriemen, Kette oder dergleichen kraftübertragend mit dem Rotationskörper gekoppelt und der Rotationskörper ist derart durch den Servomotor rotierend antreibbar.

Insbesondere stehen die Rotationskörper und die Halte- und Zentrierköpfe fluchtend zueinander und sind starr miteinander verbunden. Damit haben sie auch dieselbe Drehachse DA gemeinsam, so dass immer die Winkellage des Rotationskörpers mit derjenigen des Halte- und Zentrierkopfes identisch ist. Die Winkellage des Halte- und Zentrierkopfes wird auf diese Weise mittelbar über den Rotationskörper und die dort angebrachte Kodierung ermittelt.

Bei sehr kleinen oder schwachen Signalen kann es vorteilhaft sein, dass ortsnah am Erfassungsort der Signale eine Steuer- und Verstärkereinheit (17) vorgesehen ist, zur Verstärkung von mindestens einem Signal aus der Gruppe der Antriebe und deren Lage oder Lageveränderung und/oder aus der Gruppe der auf die Materialprobe wirkenden physikalischen Größen, wie insbesondere der Zugkraft, der Druckkraft oder der Torsionskraft.

Wenn die Vorrichtung zur Erfassung von Dreh- und Torsionskräften bestimmt ist, muss mindestens eine Torsionsmesszelle vorgesehen sein, mittels welcher eine auf die Materialprobe und/oder mindestens einen Halte- und Zentrierkopf wirkende Torsionskraft erfassbar ist.

Dabei ist die Vorrichtung bei einer vorteilhaften Ausführungsform geeignet, dass eine Materialprobe unter konstanter Zug- oder Druckkraft oder auch bei diskret oder stetig veränderlichen Zug- oder Druckkraft mittels der synchronisierten Drehantriebe um die Drehachse DA gedreht wird. Bedarfsweise kann zusätzlich bei ständiger Drehung die Materialprobe tordiert werden. Natürlich ist es auch möglich die Materialprobe ohne Zugkräfte oder Druckkräfte zu tordieren, bzw. die Position der Joche zueinander konstant zu halten, wenn einer oder beide Halte- und Zentrierköpfe gesteuert, aber mit unterschiedlicher Geschwindigkeit in oder entgegen der jeweils anderen Drehrichtung gedreht werden und so die Materialprobe tordiert wird.

In der Regel ist mindestens eine zentrale Steuer- und Auswerteeinheit vorgesehen, oder der Probenmanipulator kann mit einer solchen verbunden werden. Idealerweise wird die Verbindung über mindestens ein Interface, einen Steckplatz, Stecker und/oder Datenleitung mit einer solchen Steuer- und Auswerteeinheit vorgenommen.

Die Synchronisierung der Antriebe, insbesondere der Drehantriebe für die Halte- und Zentrierköpfe erfolgt idealerweise ebenfalls über diese zentrale Steuer- und Auswerteeinheit. Umfassen die Drehantriebe einen Motor, insb. einen Servomotor, welcher mit einem einen Drehgeber aufweisenden Rotationskörper gekoppelt ist und diesen antreibt, werden vorteilhafterweise die Positionswerte des jeweiligen Rotationskörpers bzw. dessen inkrementellen Drehgebers mit einem theoretischen bzw. rechnerisch ermittelten Sollwert verglichen. In Abhängigkeit von diesem Sollwert wird der jeweilige Motor der Drehantriebe angesteuert. Dabei wird die Motordrehzahl so geregelt, dass der vom Inkrementalnehmer erfasste Positionswert des Drehgebers dem theoretischen Sollwert gleicht. Die Synchronisierung erfolgt über das gleichzeitige, synchrone Starten der beiden Drehantriebe und durch Steuerung mittels des exakten Sollwertes an beiden Drehantriebe. Dabei ist unter synchroner Steuerung auch ein mindestens einmaliger, ein schrittweiser und/oder ein kontinuierlich gesteuerter Winkelversatz oder Winkelveränderung zw. den beiden Drehantrieben und damit der gekoppelten Halte- und Zentriereinheiten zu verstehen. Dies kann insbesondere unter permanenter Drehung beider Halte- und Zentrierköpfe vorgenommen werden.

Bei einer alternativen Synchronisierung der beiden Drehantriebe mit einem externen bzw. zugeordneten Probenträger oder Probenteller und/oder dessen Tragvorrichtung einer CT-Vorrichtung, erfolgt die Synchronisierung ebenfalls über eine zentrale Steuer- und Auswerteinheit. Dabei wird der inkrementelle Messwert, bspw. angeordnet auf mindestens einem umlaufenden Kodierungskranz des Probenträgers und/oder dessen Tragvorrichtung der CT-Vorrichtung von einem Sensor erfasst und diese Daten an die Steuer- und Auswerteeinheit übermittelt. Dieser inkrementelle Messwert wird nachfolgend, wie vorstehend ausgeführt, als Sollwert für die synchrone Steuerung der Drehantriebe verwendet.

Dabei kann der inkrementelle Messwert des Probenträgers und/oder dessen Tragvorrichtung der CT-Vorrichtung von einem zusätzlichen Drehgeber, wie mindestens einem Kodierungskranz durch einen externen Sensor erfasst und weitergeleitet werden. Alternativ kann natürlich auch der Winkelwert aus der integrierten Steuerung, bspw. der Servosteuerung des Antriebs des Probenträgers und/oder dessen Tragvorrichtung als steuernder Sollwert genutzt werden,

Bei monoaxialen Zugbelastungen kann es vorkommen, dass der Beobachtungsbereich, insbesondere der Bereich des geringsten Materialvolumens und/oder -querschnitts der Materialprobe trotz Zugkraft in beide Richtungen, nicht lokal verbleibt, sondern ein verstärktes, unsymmetrisches Fließen zu einer Seite einsetzt. Um in solchen Fällen zu verhindern, dass das Beobachtungsfenster eines Strahlungs- und/oder Wellenemitters und der zugehörigen Erfassungs- und Übertragungseinheit einer CT-Vorrichtung nicht aus dem Erfassungsbereich herausläuft, besteht eine vorteilhafte Weiterbildung einer der vorstehenden Ausführungsformen des Probenmanipulators darin, dass mindestens ein weiterer Kompensationsantrieb vorgesehen ist, mittels welchem der gesamte Probenmanipulator oder mindestens der gesamte Tragrahmen in Richtung der Drehachse verfahrbar ist. Hierzu ist der Kompensationsantrieb mit einer Steuerrichtung verbunden, welche die Regel- und Steuerungseinrichtung und/oder eine separate zentrale Steuer- und Auswerteeinheit . Zur Realisierung einer optimalen Führung und Stabilisierung können geeignete Führungs- und/oder Hebelelemente vorgesehen werden.

Von der Erfindung ist auch eine CT-Vorrichtung zum tomographischen Erfassen einer Materialprobe umfasst, bspw. mittels tomographischer Schichtaufnahmen und/oder 3D-Darstellung. Diese umfasst einen Probenraum und mindestens eine feststehende Strahlungseinrichtung und/oder Wellenemitter und mindestens eine hierzu zugehörige Erfassungs- und Übertragungseinheit, eine Steuereinheit und mindestens einen motorisch rotierbaren Probenträger. Kern ist hierbei, dass ein Probenmanipulator im Probenraum der CT-Vorrichtung angeordnet ist, wie er vorstehend in den unterschiedlichen Ausführungsvarianten beschrieben wurde.

Dabei ist mindestens ein Sensor vorgesehen, mittels welchem die Drehwinkellage des Probenträgers und/oder einer Tragvorrichtung des Probenträgers und/oder dessen Antriebs erfassbar und an die zentrale Steuer- und Auswerteeinheit überleitbar und auswertbar ist.

Unter Probenraum soll dabei ein realer, abgeschlossener Raum verstanden werden, der im Inneren der CT-Vorrichtung liegt und bspw. nur über eine Klappe oder Tür erreicht werden kann. Es soll aber auch ganz allgemein darunter ein fiktiver Raum verstanden werden, in dem die Materialprobe und deren Probenmanipulator zwischen einer Strahlungseinrichtung und der zugehörigen Detektionseinheit, der Erfassungs- und Übertragungseinheit, angeordnet ist und zu Untersuchungszwecken betrieben werden kann.

Der Probenträger der CT-Vorrichtung ist dabei ein Halteelement für Materialproben, das ohne den Probenmanipulator nutzbar ware, bspw. für Materialproben geeignet ist, die nicht in-situ unter Zugkraft oder Druckkraft inspiziert werden müssen, dessen Winkelstellung und/oder Drehbewegung aber für die Gesamtfunktion der zentrale Steuer- und Auswerteeinheit der CT-Vorrichtung von zentraler Bedeutung ist.

Im bestimmungsgemäßen Betrieb wird somit die Winkelstellung und/oder Drehbewegung des Probenmanipulators mit der des Probenträgers synchronisiert, so dass alle sonstigen Prozesse der CT-Vorrichtung und des CT-Verfahrens unverändert nutzbar sind.

Hierzu sind bei einer verbesserten Ausführungsform am Probenträger oder dessen Tragvorrichtung mindestens ein umlaufender Kodierungskranz oder idealerweise mehrere Kodierungskränze vorgesehen. Diese sind mit entsprechenden Sensoren in der Regel berührungslos auslesbar. Idealerweise wird ein oder mehrere Spuren von Kodierungen von 3000 bis zu 5000 Kodefolgen insbesondere Strichkodierungen und mehr vorgesehen. Vorteilhafterweise umfasst dabei die die Erfassungs- und Übertragungseinheit einen Inkrementalgeber des Probenträgers und einen dazugehörigen Erfassungssensor.

Bauartbedingt ist es für einzelne CT-Vorrichtung erforderlich, dass der Tragrahmen an unteren Ende oder die Grundplatte eine Durchführung oder Öffnung aufweist, durch welche der Probenträger oder dessen Tragvorrichtung einführbar sind, so dass der Probenträger und/oder dessen Tragvorrichtung und/oder der Antrieb des Probenträgers mindestens abschnittsweise in die Durchführung oder Öffnung hineinragt und in der eingebauten Endlage in Richtung des Kraftrahmes des Probenmanipulators zeigt. Dabei ist die Drehachse des Probenträgers identisch mit der Drehachse DA der Halte- und Zentrierköpfe.

Idealerweise wird zur leichten Montage im Probenraum oder an diesen angrenzend in der CT-Vorrichtung ein Adapter oder Interface vorgesehen, an oder mittels welchem der Probenmanipulator mechanisch im Probenraum befestigt ist.

Wird die Weiterbildung des Probenmanipulators genutzt, die mindestens einen Kompensationsantrieb vorsieht, mittels welchem der gesamte Probenmanipulator und/oder mindestens der gesamte Tragrahmen in Richtung der Drehachse verfahrbar ist, dann ist es vorteilhaft, wenn eine weitere berührungslose Erfassungseinheit vorgesehen wird. Diese weitere Erfassungseinheit dient dazu, den Bereich des geringsten Materialvolumens und/oder -querschnitts der Materialprobe bzw das Beobachtungsfenster und somit auch ein verstärktes, unsymmetrisches Fließen des Materials zu erfassen und diese Daten zur Steuerung des mindestens einen Kompensationsantriebes an die Regel- und Steuerungseinrichtung der zusammenwirkenden CT-Vorrichtung und/oder die separate zentrale Steuer- und Auswerteeinheit zu senden. Dabei ist die Lage der weiteren Erfassungseinheit selbst und/oder ihr Erfassungsbereich ebenfalls in Richtung der Drehachse veränderlich. Diese weitere Erfassungseinheit kann bspw. eine Kamera oder ein Lasersensor sein.

Erfindungsgemäß ist auch ein CT-Verfahren zur Untersuchung von Materialproben, insbesondere zur schichtweisen Erfassung und 3D-Darstellung von Materialproben mittels eines µCT-Verfahrens umfasst. Kern ist dabei, dass eine der vorgenannten Ausführungen der CT-Vorrichtung verwendet wird und dabei die Halte- und Zentrierköpfe mittels der zueinander synchronisierten Drehantriebe unter Zugkraft oder Druckkraft um mindestens 360° um die Drehachse (DA) rotiert werden, wobei auch die Zugkraft oder Druckkraft erfasst wird.

Eine Verbesserung besteht darin, die synchronisierte Drehung der Halte- und Zentrierköpfe in Winkelschritten von kleiner 0,18° idealerweise kleiner 0,1° vorzunehmen.

Bei einer Variante wird die Materialprobe bei der Drehung um 360° durch die synchronisierten Drehantriebe tordiert, wobei ausschließlich eine Torsionskraft oder im Wesentlichen nur eine Torsionskraft auf die Materialprobe aufgeprägt wird. Diese wird erfasst, ausgewertet und ggf. visualisiert.

In einem alternativen CT-Verfahren wird die Materialprobe bei der Drehung um 360° durch die synchronisierten Drehantriebe mit Druck- oder Zugkräften beaufschlagt und zusätzlich tordiert. Die Torsion kann dabei nur als Maß des konstanten oder veränderlichen Winkelversatzes zwischen den Halte- und Zentrierköpfen gesteuert und erfasst werden oder über mittels einer Torsionsmesseinheit kraftmäßig erfasst, ausgewertet und ggf. visualisiert werden.

Nachstehend wird die Erfindung an Hand von einigen Ausführungsbeispielen beschrieben. Nachfolgend wird ein Probenmanipulator in
- Figur 1: schematisch in einer Vorderansicht gezeigt, der zwei Antriebsmotoren zum synchronen Antrieb der Doppelspindeln aufweist, wobei die Drehantriebe der Halte- und Zentriereinheiten zwischen den Jochen angeordnet sind;
- Figur 2: schematisch in einer Vorderansicht analog zur Figur 1 gezeigt, wobei Drehantriebe auf der Rückseite der Joche angeordnet sind;
- Figur 3: schematisch in einer Vorderansicht gezeigt, wobei nur ein Antriebsmotor und eine gemeinsame Welle zum gekoppelten, synchronen Antrieb der Doppelspindeln vorgesehen ist;
- Figur 4: eine Rückansicht einer alternativen Ausführungsform zu der in Figur 3 gezeigt;
- Figur 5a, 5b: in zwei perspektivischen Darstellungen gezeigt, die im Wesentlichen der Ausführungsform nach Figur 4 entspricht;
- Figur 6a, 6b: die Ausführungsform nach Figur 5a, 5b in zwei Darstellung sowie Elemente der CT-Vorrichtung gezeigt; und
- Figur 7: schematisch in seiner Positionierung in einer CT-Vorrichtung und deren Strahlungseinrichtung gezeigt.
- Figur 8: zeigt in einer perspektivischen Darstellung Elemente eines Drehantriebes für vorgenannte Ausführungsvarianten.

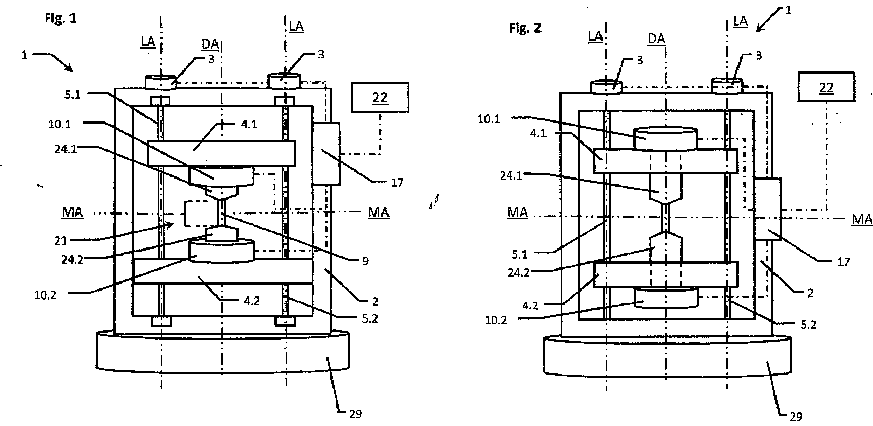

Figur 1 zeigt schematisch den Probenmanipulator 1, der einen Tragrahmen 2 aufweist. Vorliegend steht der Tragrahmen 2 auf einer Grundplatte 29 auf. Bei allen Ausführungsbeispielen kann der untere Teil des Tragrahmens 2 und die Grundplatte 29 auch als ein gemeinsames Bauteil in geeigneten Dimensionen ausgeformt sein. Am oberen Querträger des Tragrahmens 2 sind zwei Antriebsmotoren 3 angeordnet, die jeweils eine der beiden Doppelspindeln 5.1 und 5.2 um deren jeweilige Längsachse LA rotierend antreiben.

Zwischen den Doppelspindeln 5.1 und 5.2 sind brückenartig ein oberes Joch 4.1 und ein unteres Joch 4.2 angeordnet. An oder in den Jochen 4.1 und 4.2 sind entsprechende Gegengewinde zu denen der Doppelspindel 5.1 und 5.2 angebracht, so dass durch die Drehung der Doppelspindeln 5.1 und 5.2 die Joche 4.1 und 4.2 relativ zueinander verfahren werden können.

In oder an dem oberen Joch 4.1 ist ein rotierbarer Halte- und Zentrierkopf 24.1 gelagert, der mittels des Drehantriebes 10.1 motorisch angetrieben werden kann. Analogerweise ist am oder im unteren Joch 4.2 ein weiterer rotierbarer Halte- und Zentrierkopf 24.2 gelagert, welcher mittels des zugeordneten Drehantriebes 10.2 motorisch angetrieben und über die zentrale Steuer- und Auswerteeinheit 22 mit dem Drehantrieb 10.1 synchronisiert werden kann.

Antriebe und Sensoren sind bedarfsweise mit einer ersten Steuer- und Verstärkereinheit 17 verbunden, die wiederum mit einer zentralen Steuer- und Auswerteeinheit 22 permanent oder bedarfsweise verbunden ist. Die beiden Drehantriebe 10.1 und 10.2 sind mit dem jeweiligen Joch 4.1 oder 4.2 verfahrbar. Insbesondere können die Drehantriebe 4.1 und 4.2 oder die Antriebsmotoren 3 abhängig von der Signalstärke auch direkt mit der zentralen Steuer- und Auswerteeinheit 22 verbunden sein. Geeignete Steckverbindungen sind vorgesehen aber aus Gründen der Übersichtlichkeit nicht dargestellt.

Der als geschweifte Klammer angedeutete Abstand 21 der Halte- und Zentrierköpfe 24.1 und 24.2, ist identisch mit dem freien Bereich der Materialprobe 9, welcher zur Untersuchung zur Verfügung steht. Es kann auf der halben Länge des Abstandes 21 eine theoretische Mittelachse MA horizontaler Lage bestimmt werden, die senkrecht zu den Längsachsen LA der beiden Doppelspindeln 5.1, 5.2 und der Drehachse DA der Halte- und Zentrierköpfe 24.1 und 24.2 orientiert ist. Die Drehachse DA liegt weiterhin idealerweise mittig zwischen den beiden Längsachsen LA der Doppelspindeln 5.1, 5.2 und ist deckungsgleich mit der Drehachse der Materialprobe 9 im bestimmungsgemäßen Betrieb des Probenmanipulators 1.

Bei der Ausführungsform der Figur 1 sind die Drehantriebe 10.1 und 10.2 zwischen den Jochen 4.1 und 4.2 angeordnet, also unter dem oberen Joch 4.1 und auf dem unteren Joch 4.2. In der Ausführungsform nach Figur 2, die ansonsten analog der Vorgenannten ist, sind die Drehantriebe 4.1 und 4.2 auf der von den jeweiligen Halte- und Zentrierköpfen 24.1, 24.2 abgewandten Seite der Joche 4.1, 4.2 angeordnet. Diese Anordnung nach der Figur 2, zeichnet sind durch eine bessere Zugänglichkeit aus. In diesen und den nachfolgenden Ausführungsbeispielen wird der Kraftrahmen durch die beiden Joche 4.1, 4.2 und die jeweils zwischen den Jochen befindlichen Abschnitten der Doppelspindeln 5.1, 5.2 gebildet. Auf den Tragrahmen 2 oder den nicht dargestellten bzw. nur angedeuteten Lagerstellen der Doppelspindeln 5.1, 5.2 oder der Welle 6 wird durch die Zug- oder Druckkraft, mit der die Materialprobe 9 belastet wird, keine oder fast keine Belastung ausgeübt.

Dabei erfolgt bei diesen und den nachstehenden Ausführungsformen des Probenmanipulators 1 die Drehung der Doppelspindeln 4.1 und 4.2 symmetrisch zur Drehachse DA, indem die beiden parallel nebeneinander angeordneten Doppelspindeln 4.1 und 4.2 auf einer Seite mit einem Rechts- und auf der anderen Seite mit einem Linksgewinde versehen sind Die Gewinde sind idealerweise Feingewinde mit einer Gewindesteigung von einem Millimeter oder kleiner. Vorliegend werden die beiden Antriebsmotoren 3 zum Antrieb der Doppelspindeln 4.1 und 4.2 steuerungstechnisch synchronisiert.

Aus Gründen der Übersichtlichkeit sind alle Leitungen für die unterschiedlichen, elektrischen Spannungsversorgungen sowie zugehörige Komponenten nicht dargestellt. In der Figur 2 wird der Probenmanipulator schematisch in einer Vorderansicht analog zur Figur 1 gezeigt, wobei Drehantriebe auf der Rückseite der Joche angeordnet sind.

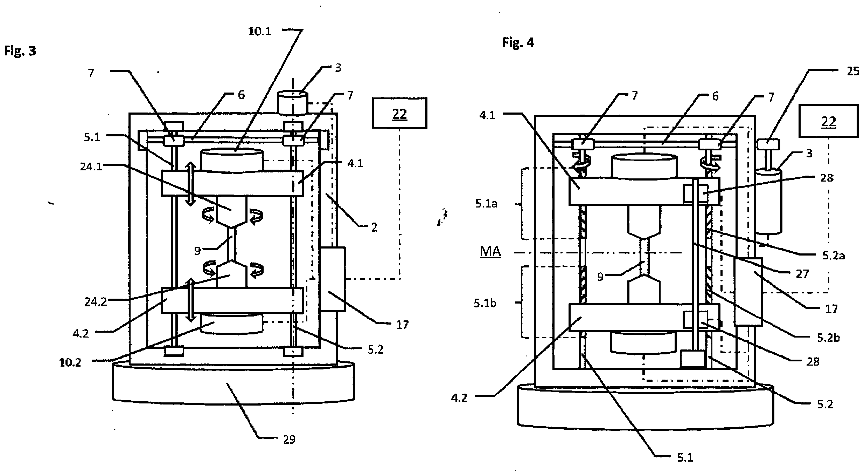

Die Figur 3 zeigt ebenfalls schematisch in einer Vorderansicht eine Ausführungsform, bei der nur eine Doppelspindel 5.2 direkt von einem am Tragrahmen 2 angeordneten Antriebsmotor 3 angetrieben wird. Die andere Doppelspindel 5.1 ist mechanisch über die Welle 6 gekoppelt, die beispielsweise eine Doppelschneckenwelle sein kann. Die Getriebeeinheiten 7 sind idealerweise selbsthemmende Schneckengetriebe. Dabei weist die Welle 6 an beiden Seiten im Bereich der Getriebe 7 idealerweise je ein Schneckenrad auf, die zueinander gegenläufig sind, worüber die beiden Doppelspindeln 5.1, 5.2 synchron aber gegenläufig angetrieben werden. Hierdurch wird ein hochpräziser Gleichlauf der Doppelspindeln 5.1, 5.2 auf beiden Seiten erreicht.

Wie in der Rückansicht der Figur 4 derselben Ausführungsform wie Figur 3 gezeigt ist, wird der Weg der Verformung des Probenmaterials 9 bzw. der Abstandsänderung der Joche 4.1 und 4.2 zueinander mittels eines linearen Weggebers 27 und zwei zugehörige Sensoren oder Wegnehmer 28 erfasst und an eine Steuer- und Auswerteeinheit übermittelt. Alternativ könnte auch nur ein Wegnehmer 28 vorgesehen werden, wie es in den nachfolgenden Beispielen der Fall ist. Die Wegerfassung erfolgt idealerweise nach dem Differential-Transformatorprinzip oder Linearencoder. Alternativ kann die Längenänderung der Materialprobe 9, d.h. der Abstandsänderung der Joche 4.1, 4.2 zueinander auch mit einem Extensometer gemessen werden. Die lineare Wegefassung könnte auch über eine reine softwareseitige Berechnung der Winkeländerung mindestens eines die Doppelspindeln antreibenden Antriebsmotors erfolgen. Es hat sich aber als vorteilhaft herausgestellt, die lineare Wegänderung vorrichtungsunabhängig mit einem eigenen Weggeber zu erfassen und diese Daten geeignet auszuwerten. Dabei wird in einer Variante der sich vertikal erstreckende Weggeber 27 an einem der beiden Joche 4.2 befestigt und verfährt mit diesem. An dem gegenüber liegenden Joch 4.1 ist der Sensor, also der Wegnehmer 28 befestigt, der eine geeignete, inkrementelle Kodierung des Weggebers erfasst und diese Signale weiterleitet. Bei einer alternativen Variante ist der linear, vertikal erstreckte Weggeber 27 mit seiner inkrementellen Kodierung am Tragrahmen 2 oder einer Grundplatte 29 mit dem einen Ende starr verbunden bzw. dort befestigt. Weiterhin ist mindestens auf einem Joch, idealerweise auf beiden Jochen 4.1, 4.2 ein Sensor, also ein Wegnehmer 28 angeordnet, der mit dem jeweiligen Joch verfährt und so die Wegänderung über die Erfassung der inkrementellen Kodierung detektiert. Diese Anordnungen zur linearen Wegerfassung sind für alle Ausführungsformen sehr vorteilhaft einsetzbar.

Das Prinzip der Synchronisierung der Drehantriebe 10.1 und 10.2 erfolgt dabei insbesondere in einer der Alternativen wie vorstehend ausgeführt.

In der Figur 4 ist weiterhin ein Antriebsmotor 3 dargestellt, der als Gleichstrommotor ausgestaltet ist und über eine Getriebeeinheit 25 die Welle 6 und hierüber die beiden Doppelspindeln 5.1, 5.2 synchron antreibt. Die Welle 6 ist, wie bspw. im Zusammenhang mit der Figur 3 beschrieben, mit den Doppelspindeln 5.1, 5.2 gekoppelt.

Wie in Figur 4 gezeigt, weisen die mit einem Feingewinde ausgestatteten Doppelspindeln 5.1 und 5.2 jeweils zwei Gewindeabschnitte mit unterschiedlichen Gewindeorientierungen auf, wobei die jeweiligen Gegengewinde an oder in den Jochen 4.1 und 4.2 nicht dargestellt sind.

Ist der obere Gewindeabschnitt 5.1 a der Doppelspindel 5.1 als Linksgewinde ausgeführt, ist der untere Gewindeabschnitt 5.1b als Rechtsgewinde ausgebildet. Da im bestimmungsgemäßen Betrieb die beiden Doppelspindeln 5.1 und 5.2 gegenläufig rotiert werden, damit keine Kräfte auf den Tragrahmen oder die Lagerstellen eingebracht werden, ist der obere Gewindeabschnitt 5.2a der Doppelspindel 5.2 als Rechtsgewinde und der untere Gewindeabschnitt 5.2b als Linksgewinde ausgeführt. Bei gegenläufigem, synchronen Antrieb der beiden Doppelspindeln 5.1, 5.2 werden durch diese Anordnung die beiden Joche 4.1, 4.2 vertikal mit derselben Geschwindigkeit linear und gegenläufig bewegt. Bei einer alternativen Ausführung des Gewindeabschnittes 5.1a als Rechtsgewinde werden die anderen Gewindeabschnitte entsprechend analog angepasst.

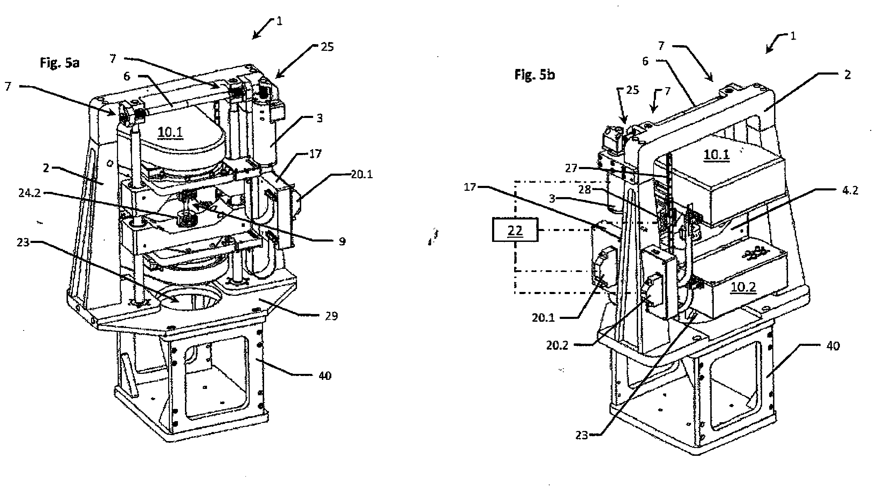

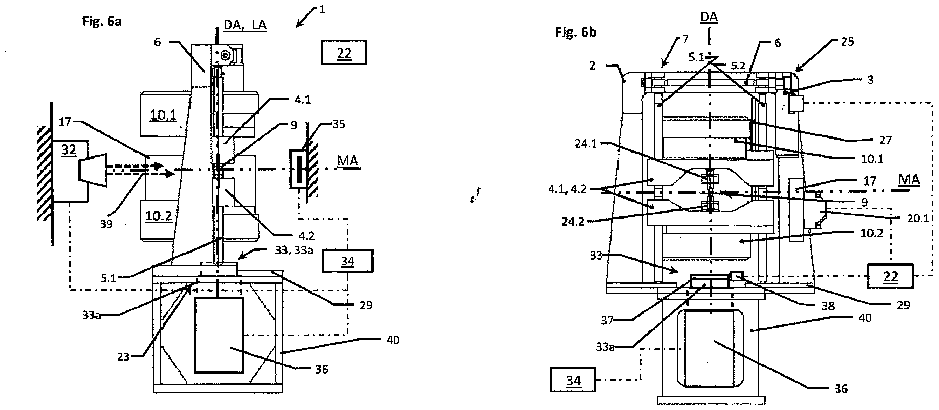

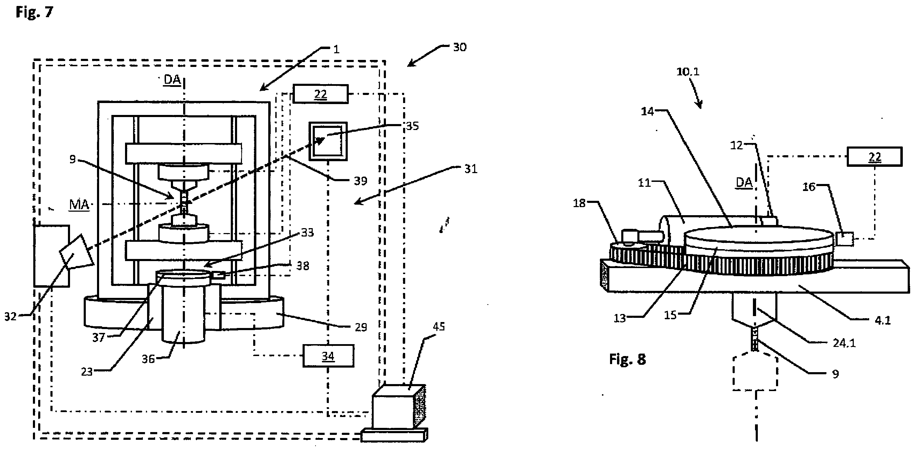

Die Figuren 5a und 5b zeigen in perspektivischer Darstellung die Ausführungsform nach Figur 4. Dabei ist in der Grundplatte 29 des Probemanipulators 1 bzw. in dem unteren Tragrahmen 2 eine Durchführungsöffnung 23 vorgesehen. Durch diese Durchführungsöffnung 23 kann der in den Figur 6a, 6b erkennbare Probenträger 33 einer nicht dargestellten CT-Vorrichtung hindurchgeführt werden, so dass dessen Drehachse deckungsgleich mit der Drehachse DA der Halte- und Zentrierköpfe 24.1, 24.2 orientiert ist. Weiterhin ist ein Adapter 40 dargestellt, über welchen der Probenmanipulator 1 mit einer CT-Vorrichtung 30 (Fig. 7) verbindbar ist. Figur 5b zeigt in einer perspektivischen Darstellung die Rückseite der Ausführungsvariante gemäß Figur 5a. Dort ist insbesondere der linearen Weggebers 27 und der zugehörige Sensor oder Wegnehmer 28 erkennbar, der an dem oberen Joch 4.1 montiert ist und mit diesem vertikal verfahren wird. Der lineare Weggeber 27 mit seiner inkrementellen Kodierung ist an seinem unteren Ende fixiert und wird in der Wegnehmereinheit geführt. Die erfassten Werte werden vom Wegnehmer 28 an die Steuer- und Auswerteeinheit 22 übermittelt.

Die Figur 6a zeigt in einer schematischen Seitenansicht den Probenmanipulator 1 nach den Figuren 5a, 5b, wobei prinzipiell auch eine der anderen Ausführungsformen analog vorgesehen werden kann. Der Probenmanipulator 1 ist in seiner Zuordnung zum Probenträger 33, dem Strahlungs- und/oder Wellenemitter 32 und der Erfassungs- und Übertragungseinheit 35 der CT-Vorrichtung dargestellt. Wie in Vorderansicht der Figur 6b deutlicher zu erkennen, kann der Probenträger 33 durch die Grundplatte 29 und die dortige Durchführungsöffnung 23 ragen. An einem rotierenden Probenträger 33 ist eine umlaufende inkrementelle Kodierung 37 zur unabhängigen Erfassung der Winkellage vorgesehen, die vom Sensor oder Wegnehmer 38 erfasst wird und an die zentrale Steuer- und Auswerteeinheit 22 geleitet wird. Über diese Kopplung ist eine vollständige Synchronisation der Drehbewegung aller Elemente um die Drehachse DA möglich ohne Eingriff in die Steuerung der CT-Vorrichtung. Es liegt eine Master-Slave-Anordnung vor, da die CT-Vorrichtung 30 über die Bewegung des Probenträgers 33 als Master dient und der Probenmanipulator 1 in seiner Bewegung als Slave über die Erfassung der Winkellage bzw. Winkelveränderung folgt.

Natürlich kann auch das Master-Slave-Verhältnis umgekehrt werden, wenn dies seitens der CT-Vorrichtung ermöglicht wird. In beiden Fällen ist eine perfekte Synchronisation und/oder Abstimmung aller Bewegungen jederzeit möglich.

Bei einer Ergänzung ist mindestens ein Kompensationsantrieb und geeignete Führungen (nicht dargestellt) vorgesehen, in der Regel mindestens zwei Kompensationsantriebe, die unterhalb der Grundplatte 29 und/oder auf dem Interface 40 montiert sind. Diese sind geeignet, den gesamten Probenmanipulator oder mindestens den gesamten Tragrahmen in Richtung der Drehachse DA zu verfahren. Bei einer alternativen Ausführungsform (nicht dargestellt), ist das Interface 40 in Richtung der Drehachse DA vertikal verfahrbar.

In der Figur 7 ist sehr schematisch eine CT-Vorrichtung 30 gezeigt, in deren Probenraum 31 der Probenmanipulator 1 nach einem der vorherigen Ausführungsbeispiele eingebracht ist. Der Probenmanipulator ist dabei vereinfacht dargestellt. Der Probenträger 33 ragt zumindest teilweise durch die Durchführungsöffnung 23 des Probenträgers 33 in Richtung der Materialprobe 9, wobei der Probenträger 33 oder dessen Antrieb 36 der CT-Vorrichtung 30 derart fluchtend zu den Halte- und Zentrierköpfen 24.1, 24.2 ausgerichtet ist, dass diese eine einzige gemeinsame Drehachse DA aufweisen.

Der Probenträger 33 wurde wie bereits oben ausgeführt mit einem zusätzlichen, umlaufenden Kodierungskranz 37 bestückt, der eine oder mehrere inkrementelle Kodierungen aufweist. Diesem Kranz zugeordnet ist ein Sensor als Wegnehmer 38, mit welchem die Kodierungen und damit die Winkeländerung des Probenträgers 33 erfassbar und nachfolgend in einer zentralen Steuer- und Auswerteeinheit auswertbar sind.

Die CT-Vorrichtung 30 weist den systemtypischen und für die Materialprobe 9 geeigneten Strahlungs- und/oder Wellenemitter 32 und mindestens eine zugeordnete Erfassungs- und Übertragungseinheit 35 auf, sowie eine Vielzahl nicht dargestellter Elemente zum sicheren, bestimmungsgemäßen Betrieb der CT-Vorrichtung 30. Der Probenmanipulator 1 ist im Strahlengang 39 zwischen dem Strahlungs- und/oder Wellenemitter 32 angeordnet, so dass eine eingespannte Materialprobe 9 um mindestens 360° in-situ unter gleichbleibenden oder sich veränderlichen Testparametern belastet und gedreht werden kann. Der Strahlengang 39 verläuft dabei idealerweise horizontal also in Richtung der Mittelachse MA bzw. senkrecht zur Drehachse DA.

Die Testparameter sind insbesondere eine oder veränderliche auf die Materialprobe wirkende Zugkräfte, Druckkräfte und/oder Torsionskräfte. In der Regel wird die CT-Vorrichtung 30 über eine vorrichtungseigene zentrale Regel- und Steuereinrichtung 34 betrieben. Die eigentliche Auswertung und ggf. bildliche Darstellung aller Messdaten und der Betriebsparameter, wird in der Regel mit einem geeigneten Computer 45 erfolgen. Je nach Ausführungsform der CT-Vorrichtung sind die zentrale Regel- und Steuerungseinrichtung 34 und/oder die zentrale Steuer- und Auswerteeinheit 22 in bspw. einem Computer 45 integriert oder werden über einen Computer 45 bedient.

In der Figur 8 sind einige der Elemente des Drehantriebes 10.1 gezeigt, ohne die umschließende Einhausung oder Abdeckung. Dieser kann bei jeder der vorherigen Ausführungsbeispiele vorgesehen werden. Der antreibende Servomotor 11 ist über eine mechanisch gekoppelte Umlenkung 18 und einen gezahnten, spannbaren und damit spielfreien Transmissionsriemen 13 mit dem Rotationskörper 14 verbunden und treibt diesen an. Der Rotationskörper 14 ist an einer nicht dargestellten Grundplatte oder dem Joch 4.1 rotierbar gelagert und starr mit dem Halte- und Zentrierkopf 24.1 verbunden. Zur Steuerung und Synchronisierung der Drehantriebe 10.1 und 10.2 werden die Winkeldaten der Servosteuerung 12 mit der inkrementellen Kodierung des Drehgebers 15 gemeinsam ausgewertet. Bei einer besonders vorteilhaften Ausführungsform umfasst die gesamte umlaufende Kodierung bis zu 3.000 Einzelkodierungen auf dem gesamten Umfang. Idealerweise werden bis zu 5.000 Einzelkodierungen vorgesehen, die insbesondere als Einzelstriche oder Balken ausgeführt sein können.

Vorliegend wurden zum leichteren Verständnis Angaben zur Ausrichtung des Probenmanipulators gemacht, wie oben, unten, horizontal und vertikal. Es ist für den Fachmann unmittelbar ersichtlich, dass der beschriebene Probenmanipulator auch in einer horizontalen Ausrichtung angeordnet und betrieben werden kann bzw. in einer geneigten Lage.

Insbesondere in einer ebenfalls vorteilhaften horizontalen Einbau- und Betriebslage liegen die Längsachsen LA und die Drehachse DA in einer horizontalen Ebene und die sonstigen Ausrichtungen ergeben sich analog.

### Bezugszeichenliste

- 1: Probenmanipulator
- 2: Tragrahmen
- 3: Antriebsmotor
- 4.1: Joch, oberes
- 4.2: Joch, unteres
- 5.1: Doppelspindel
- 5.2: Doppelspindel
- 5.1a, b: Gewindeabschnitt
- 5.2a, b: Gewindeabschnitt
- 6: Welle
- 7: Getriebeeinheit

- 9: Materialprobe
- 10.1: Drehantrieb, oberer
- 10.2: Drehantrieb, unterer
- 11: Servomotor
- 12: Steuereinheit
- 13: Transmissionsriemen
- 14: Rotationskörper
- 15: Drehgeber
- 16: Inkrementalnehmer
- 17: Steuer- und Verstärkereinheit
- 18: Umlenkung

- 20.1: Steckverbindung
- 20.2: Steckverbindung
- 21: Abstand
- 22: Steuer- und Auswerteeinheit (zentrale)
- 23: Öffnung oder Durchführung

- 24.1: Halte- und Zentrierkopf, oberer
- 24.2: Halte- und Zentrierkopf, unterer
- 25: Getriebeeinheit

- 27: Weggeber (linear)
- 28: Wegnehmer
- 29: Grundplatte
- 30: CT-Vorrichtung
- 31: Probenraum
- 32: Strahlungs- und/oder Wellenemitter
- 33: Probenträger
- 33a: Tragvorrichtung
- 34: Steuereinheit
- 35: Erfassungs- und Übertragungseinheit Detektionseinheit
- 36: Antrieb des Probenträgers
- 37: Kodierungskranz
- 38: Sensor
- 39: Strahlengang
- 40: Interface

- 45: Computer

- LA: Längsachse
- MA: Mittelache
- DA: Drehachse

## Patentansprüche

1. Probenmanipulator (1) zur rotierenden Zug- oder Druckbeanspruchung einer Materialprobe (9), umfassend einen Tragrahmen (2), zwei linear verfahrbare Joche (4.1, 4.2), mindestens einen Antriebsmotor (3) zum Verfahren mindestens eines der Joche (4.1) relativ zu dem anderen Joch (4.2), sowie zwei um eine gemeinsame Drehachse (DA) mittels Drehantrieben (10.1, 10.2) motorisch antreibbare Halte- und Zentrierköpfe (24.1, 24.2) zur Aufnahme und Halterung der Materialprobe (9), wobei jedem Joch (4.1, 4.2) jeweils ein Halte- und Zentrierkopf (24.1, 24.2) zugeordnet ist, mindestens eine Kraftmesszelle zur Erfassung der auf mindestens einen der Halte- und Zentrierköpfe (4.1, 4.2) wirkenden Zug- oder Druckkräfte, und wobei die Winkellage beider Drehantriebe (10.1, 10.2) sensorisch erfassbar sind, und wobei weiterhin alle Antriebe und Sensoren einzeln oder gemeinsam mit einer Rechen- und Auswerteeinheit (22) datenleitend über mindestens eine Leitung- und/oder Steckverbindung (22.1, 22.2) verbindbar sind, **dadurch gekennzeichnet, dass**
an beiden Joche (4.1, 4.2) jeweils ein Drehantrieb (10.1, 10.2) angeordnet ist, wobei beide Joche (4.1, 4.2) und somit auch die beiden jeweils dort angeordneten Drehantriebe (10.1, 10.2) der Halte- und Zentrierköpfe (24.1, 24.2) linear zueinander verfahrbar sind, und wobei der jeweilige zugeordnete Halte- und Zentrierkopf (24.1, 24.2) derart am Joch (4.1, 4.2) oder im Drehantrieb (10.1, 10.2) gelagert ist, dass dieser ebenfalls gemeinsam mit dem Drehantrieb (10.1, 10.2) und dem Joch (4.1, 4.2) verfahrbar und von dem Drehantrieb (10.1, 10.2) rotierbar ist, und wobei mittels der beiden Drehantriebe (10.1, 10.2) die beiden Halte- und Zentrierköpfe (24.1, 24.2) und eine dort angeordnete Materialprobe (9) mindestens um 180°, insbesondere um 360° um eine Drehachse (DA) drehbar und tordierbar ist.

2. Vorrichtung nach Anspruch 1, **dadurch gekennzeichnet, dass** die beiden Joche (4.1, 4.2) jeweils an zwei durch mindestens den einen Antriebsmotor (3) drehbar um die jeweils eigene Längsachse (LA) antreibbare Spindeln verfahrbar sind.

3. Vorrichtung nach Anspruch 1, **dadurch gekennzeichnet, dass** die beiden Joche (4.1, 4.2) jeweils an zwei durch den einen Antriebsmotor (3) drehbar um die jeweils eigene Längsachse (LA) antreibbare Doppelspindeln (5.1, 5.2) verfahrbar sind, wobei die beiden Doppelspindeln (5.1, 5.2) durch eine Welle (6) und Getriebeeinheiten (7) gekoppelt sind.

4. Vorrichtung nach Anspruch 3, **dadurch gekennzeichnet, dass** die Doppelspindeln (5.1, 5.2) jeweils Längenabschnitte mit gegenläufigen Gewindesteigungen aufweisen und derart zueinander angeordnet und über die Getriebeeinheiten (7) gekoppelt sind, dass die beiden Joche (4.1, 4.2) synchron aufeinander zu und voneinander weg bewegbar sind, indem die Getriebeeinheiten (7) gegenläufige Drehungen in den Doppelspindeln (5.1, 5.2) erzeugen.

5. Vorrichtung nach einem der vorherigen Ansprüche, **dadurch gekennzeichnet, dass** die Drehantriebe (10.1, 10.2) einen Servomotor mit einer Servomotorsteuerung, einen separaten Rotationskörper, der einen umlaufenden Inkrementalgeber aufweist, dem wiederum ein Sensor als Erfassungseinheit zugeordnet ist, wobei der Servomotor über ein Übertragungselement kraftübertragend mit dem Rotationskörper gekoppelt ist und der Rotationskörper durch den Servomotor rotierend antreibbar ist.

6. Vorrichtung nach einem der vorherigen Ansprüche, **dadurch gekennzeichnet, dass** eine Steuer- und Verstärkereinheit (17) vorgesehen ist, zur Verstärkung von mindestens einem Signal aus der Gruppe der Antriebe und deren Lage oder Lageveränderung und/oder aus der Gruppe der auf die Materialprobe wirkenden physikalischen Größen, wie insbesondere der Zugkraft, der Druckkraft oder der Torsionskraft.

7. Vorrichtung nach einem der vorherigen Ansprüche, **dadurch gekennzeichnet, dass** mindestens eine Torsionsmesszelle vorgesehen ist, mittels welcher eine auf die Materialprobe und/oder mindestens einen Halte- und Zentrierkopf wirkende Torsionskraft erfassbar ist.

8. Vorrichtung nach einem der vorherigen Ansprüche, **dadurch gekennzeichnet, dass** mindestens ein weiterer Kompensationsantrieb sowie Führungs- und/oder Hebelelemente sind, mittels welchem der gesamte Probenmanipulator oder mindestens der gesamte Tragrahmen in Richtung der Drehachse verfahrbar ist, und wobei der Kompensationsantrieb mit der zentralen Rechen- und Auswerteeinheit (22) verbindbar ist.

9. CT-Verfahren zur Untersuchung von Materialproben (9), insbesondere zur schichtweisen Erfassung und 3D-Darstellung von Materialproben (9) mittels eines µCT-Verfahrens, **dadurch gekennzeichnet, dass** CT-Vorrichtung (30) zum tomographischen Erfassen einer Materialprobe (9) bspw. mittels tomographischer Schichtaufnahmen und/oder 3D-Darstellung, umfassend mindestens eine feststehende Strahlungseinreichung (32), mindestens eine hierzu zugehörige Erfassungs- und Übertragungseinheit (35), einen Probenraum (31), eine Steuereinheit (34), einen motorisch rotierbaren Probenträger (33) verwendet wird, wobei ein Probenmanipulator (1) nach einem der vorgenannten Ansprüche im Probenraum (31) der CT-Vorrichtung (30) angeordnet ist, wobei mindestens ein Sensor (38) vorgesehen ist, mittels welcher die Drehwinkellage des Probenträgers (33) und/oder der Tragvorrichtung (33a) des Probenträgers (33) und/oder dessen Antrieb (36) erfassbar und an die zentrale Steuer- und Auswerteeinheit (22) überleitbar und auswertbar ist, und wobei die Halte- und Zentrierköpfe (24.1, 24.2) mittels der zueinander synchronisierten Drehantriebe (10.1, 10.2) unter Zugkraft oder Druckkraft um mindestens 360° um die Drehachse (DA) rotiert werden, wobei die Zugkraft oder Druckkraft erfasst wird.

10. CT-Verfahren nach Anspruch 9, **dadurch gekennzeichnet, dass** die synchronisierte Drehung der Halte- und Zentrierköpfe (24.1, 24.2) in Winkelschritten von kleiner 0,18° idealerweise kleiner 0,1 ° erfolgt.

11. CT-Verfahren nach Anspruch 9 oder 10, **dadurch gekennzeichnet, dass** die Erfassungs- und Übertragungseinheit (35) der CT-Vorrichtung eine direkte Datenübertragungsleitung der Drehwinkellage des Probenträgers (33) oder dessen Antriebs (36) umfasst oder hieraus besteht.

12. CT-Verfahren nach einem der Ansprüche 9 bis 11, **dadurch gekennzeichnet, dass** die Materialprobe (9) bei der Drehung durch die synchronisierten Drehantriebe (10.1, 10.2) tordiert wird, wobei nur eine Torsionskraft oder im Wesentlichen nur eine Torsionskraft auf die Materialprobe (9) aufgeprägt wird, und wobei die Torsionskraft erfasst wird.

13. CT-Verfahren nach Anspruch 9 oder 12, **dadurch gekennzeichnet, dass** die Materialprobe (9) bei der Drehung durch die synchronisierten Drehantriebe (10.1, 10.2) zusätzlich tordiert wird, und wobei auch die Torsionskraft erfasst wird.

## Claims

1. Sample manipulator (1) for rotating tensile or compressive stress of a material sample (9), comprising a supporting frame (2), two linearly movable cross members (4.1, 4.2), at least one drive motor (3) for moving at least one of the cross members (4.1) relative to the other cross member (4.2), as well as two retaining and centring heads (24.1, 24.2) for receiving and holding the material sample (9) that can be motor-driven by means of rotary drives (10.1, 10.2) about a common axis of rotation (DA), wherein in each case one retaining and centring head (24.1, 24.2) is assigned to each cross member (4.1, 4.2), at least one load cell for capturing the tensile or compressive forces acting on at least one of the retaining and centring heads (4.1, 4.2), and wherein the angular position of the two rotary drives (10.1, 10.2) can be captured by sensors, and wherein furthermore all drives and sensors can be connected, individually or together, to an arithmetic and evaluation unit (22) in a data-transmitting manner via at least one line and/or plug connection (22.1, 22.2) **characterized in that**
in each case a rotary drive (10.1, 10.2) is arranged on the two cross members (4.1, 4.2), wherein the two cross members (4.1, 4.2) and thus also the two rotary drives (10.1, 10.2), arranged there in each case, of the retaining and centring heads (24.1, 24.2) are linearly movable towards one another, and wherein the respective assigned retaining and centring head (24.1, 24.2) is mounted on the cross member (4.1, 4.2) or in the rotary drive (10.1, 10.2) in such a way that it is likewise movable together with the rotary drive (10.1, 10.2) and the cross member (4.1, 4.2) and rotatable by the rotary drive (10.1, 10.2), and wherein, by means of the two rotary drives (10.1, 10.2), the two retaining and centring heads (24.1, 24.2) and a material sample (9) arranged there are rotatable and twistable by at least 180°, in particular by 360°, about an axis of rotation (DA).

2. Device according to claim 1, **characterized in that** the two cross members (4.1, 4.2) are movable in each case on two spindles that are drivable rotatably in each case about their own longitudinal axis (LA) by at least the one drive motor (3).

3. Device according to claim 1, **characterized in that** the two cross members (4.1, 4.2) are movable in each case on two double spindles (5.1, 5.2) that are drivable rotatably in each case about their own longitudinal axis (LA) by the one drive motor (3), wherein the two double spindles (5.1, 5.2) are coupled by a shaft (6) and gear units (7).

4. Device according to claim 3, **characterized in that** the double spindles (5.1, 5.2) each have longitudinal sections with opposing thread pitches and are arranged relative to one another and coupled via the gear units (7) in such a way that the two cross members (4.1, 4.2) are movable synchronously towards one another and away from one another because the gear units (7) generate opposing rotations in the double spindles (5.1, 5.2).

5. Device according to one of the preceding claims, **characterized in that** the rotary drives (10.1, 10.2) a servo motor with a servo motor controller, a separate rotational body, which has a circumferential incremental encoder, to which in turn a sensor is assigned as capturing unit, wherein the servo motor is coupled to the rotational body, in a force-transmitting manner, via a transmission element and the rotational body is drivable in a rotating manner by the servo motor.

6. Device according to one of the preceding claims, **characterized in that** a control and amplifier unit (17) is provided for amplifying at least one signal from the group of drives and the position or change in position thereof and/or from the group of the physical variables acting on the material sample, such as in particular the tensile force, the compressive force or the torsional force.

7. Device according to one of the preceding claims, **characterized in that** at least one torsion measuring cell is provided, by means of which a torsional force acting on the material sample and/or at least one retaining and centring head can be captured.

8. Device according to one of the preceding claims, **characterized in that** at least one further compensation drive as well as guide and/or lever elements are, by means of which the whole sample manipulator or at least the whole supporting frame is movable in the direction of the axis of rotation, and wherein the compensation drive is connectable to the central arithmetic and evaluation unit (22).

9. CT method for examining material samples (9), in particular for the layer-by-layer capturing and 3D representation of material samples (9) by means of a µCT method, **characterized in that**
a CT device (30) is used for the tomographic capturing of a material sample (9) e.g. by means of tomograms and/or 3D representation, comprising at least one stationary radiation emitter (32), at least one capturing and transmission unit (35) associated herewith, a sample compartment (31), a control unit (34) and a motor-rotatable sample holder (33), wherein a sample manipulator (1) according to one of the above-named claims is arranged in the sample compartment (31) of the CT device (30), wherein at least one sensor (38) is provided, by means of which the rotational angular position of the sample holder (33) and/or of the supporting device (33a) of the sample holder (33) and/or the drive thereof (36) can be captured and transferred to the central control and evaluation unit (22) and evaluated, and wherein the retaining and centring heads (24.1, 24.2) are rotated by means of the rotary drives (10.1, 10.2), synchronized with one another, by at least 360° about the axis of rotation (DA) under tensile force or compressive force, wherein the tensile force or compressive force is captured.

10. CT method according to claim 9, **characterized in that** the synchronized rotation of the retaining and centring heads (24.1, 24.2) is effected in angular increments of less than 0.18°, ideally less than 0.1°.

11. CT method according to claim 9 or 10, **characterized in that** the capturing and transmission unit (35) of the CT device comprises or consists of a direct data-transmission line for the rotational angular position of the sample holder (33) or the drive thereof (36).

12. CT method according to one of claims 9 to 11, **characterized in that** the material sample (9) is twisted during the rotation by the synchronized rotary drives (10.1, 10.2), wherein only a torsional force or substantially only a torsional force is applied to the material sample (9), and wherein the torsional force is captured.

13. CT method according to claim 9 or 12, **characterized in that** the material sample (9) is additionally twisted during the rotation by the synchronized rotary drives (10.1, 10.2), and wherein the torsional force is also captured.

## Revendications

1. Manipulateur d'échantillons (1) permettant la sollicitation à la traction ou à la compression par la rotation d'un échantillon de matière (9), comprenant un cadre porteur (2), deux travées (4.1, 4.2) pouvant être déplacées de façon linéaire, au moins un moteur d'entraînement (3) permettant de déplacer au moins une des travées (4.1) par rapport à l'autre travée (4.2), ainsi que deux têtes de maintien et de centrage (24.1, 24.2) pouvant être entraînées de façon motorisée autour d'un axe de rotation commun (DA) à l'aide d'entraînements tournants (10.1, 10.2) afin de recevoir et de fixer l'échantillon de matière (9), une tête de maintien et de centrage (24.1, 24.2) étant respectivement associée à chaque travée (4.1,4.2), au moins une cellule de mesure de force permettant de détecter les forces de traction ou de compression agissant sur au moins une des têtes de maintien et de centrage (4.1, 4.2) et la position angulaire des deux entraînements tournants (10.1, 10.2) pouvant être détectée par voie de capteurs et tous les entraînements et capteurs pouvant en outre être reliés individuellement ou conjointement à une unité de calcul et d'analyse (22) conduisant les données via au moins une liaison par câble ou par enfichage (22.1, 22.2) ;
**caractérisé en ce que** :
respectivement un entraînement tournant (10.1, 10.2) est disposé au niveau des deux travées (4.1,4.2), les deux travées (4.1, 4.2) et ainsi également les deux entraînements tournants (10.1, 10.2) respectivement disposés à cet endroit des têtes de maintien et de centrage (24.1, 24.2) pouvant être déplacés de façon linéaire l'un par rapport à l'autre et la tête de maintien et de centrage (24.1, 24.2) respective associée étant disposée de telle sorte au niveau de la travée (4.1, 4.2) ou dans l'entraînement tournant (10.1, 10.2) que celui-ci peut également être déplacé conjointement avec l'entraînement tournant (10.1, 10.2) et la travée (4.1, 4.2) et être tourné par l'entraînement tournant (10.1, 10.2) et les deux têtes de maintien et de centrage (24.1, 24.2) et un échantillon de matière (9) disposé à cet endroit pouvant être tournés et tordus d'au moins 180°, notamment de 360°, autour d'un axe de rotation (DA) à l'aide des deux entraînements tournants (10.1, 10.2).

2. Dispositif selon la revendication 1, **caractérisé en ce que** les deux travées (4.1, 4.2) peuvent être déplacées respectivement au niveau de deux broches pouvant être entraînées par le biais d'au moins un moteur d'entraînement (3) pouvant tourner autour de l'axe longitudinal (LA) respectivement propre.

3. Dispositif selon la revendication 1, **caractérisé en ce que** les deux travées (4.1, 4.2) sont respectivement déplacées au niveau de deux broches doubles (5.1, 5.2) pouvant être entraînées par un moteur d'entraînement (3) de façon à pouvoir tourner autour de l'axe longitudinal (LA) respectivement propre, les deux broches doubles (5.1, 5.2) étant couplées par le biais d'un arbre (6) et d'unités de transmission (7).

4. Dispositif selon la revendication 3, **caractérisé en ce que** les broches doubles (5.1, 5.2) comportent des sections longitudinales respectives avec des pas de filetage opposés et disposées de telle sorte l'une par rapport à l'autre et couplées de telle sorte via les unités de transmission que les deux travées (4.1, 4.2) peuvent être déplacées de façon synchrone l'une sur l'autre permettant de les éloigner ou de les écarter en réalisant les unités de transmission (7) avec des rotations contraires dans les broches doubles (5.1, 5.2).

5. Dispositif selon l'une quelconque des revendications précédentes, **caractérisé en ce que** les entraînements tournants (10.1, 10.2) comportent un servomoteur avec une servocommande de moteur comportant un corps tournant séparé à son tour associé à un capteur incrémentiel périphérique prenant la forme d'une unité de détection, le servomoteur étant couplé au corps tournant de façon à transmettre les forces par le biais d'un élément de transmission de force * et étant entraîné en rotation par le servomoteur.

6. Dispositif selon l'une quelconque des revendications précédentes, **caractérisé en ce qu'**une unité de commande et d'amplification (17) est prévue afin d'amplifier au moins un signal appartenant au groupe des entraînements et de leur position ou de leur changement de position et/ou appartenant au groupe des grandeurs physiques agissant sur l'échantillon de matière, notamment la force de traction, la force de compression ou la force de torsion.

7. Dispositif selon l'une quelconque des revendications précédentes, **caractérisé en ce qu'**au moins une cellule de mesure de torsion est prévue à l'aide de laquelle une force de torsion peut être déterminée, ladite force agissant sur l'échantillon de matière et/ou sur au moins une tête de maintien et de centrage.

8. Dispositif selon l'une quelconque des revendications précédentes, **caractérisé en ce qu'**au moins un entraînement de compensation supplémentaire prend la forme d'éléments de guidage et/ou d'éléments de levier à l'aide desquels la totalité du manipulateur d'échantillons ou au moins la totalité du cadre porteur peut être déplacée en direction de l'axe de rotation et l'entraînement de compensation pouvant être relié à l'unité de calcul et d'analyse centrale (22).

9. Procédé CT d'analyse d'échantillons de matière (9), notamment de détection par couches et de représentation 3D d'échantillons de matière (9) à l'aide d'un procédé µCT, **caractérisé en ce que** le dispositif CT (30) est utilisé pour la détection tomographique d'un échantillon de matière (9) et/ou à l'aide de prises de vue de couches tomographiques et/ou d'une représentation 3D, comprenant au moins un enrichissement de rayonnement fixe (32), au moins une unité de détection et de transmission (35) associée, un espace pour les échantillons (31), une unité de commande (34), un support d'échantillon (33) pouvant pivoter de façon motorisée, un manipulateur d'échantillons (1) selon l'une quelconque des revendications précédentes étant disposé dans l'espace prévu pour les échantillons (31) du dispositif CT (30), au moins un capteur (38) étant prévu à l'aide duquel les positions angulaires de rotation du support d'échantillon (33) et/ou du dispositif porteur (33a) du support d'échantillon (33) et/ou de son entraînement (36) peuvent être détectées et être transmises via l'unité de commande et d'analyse centrale (22) et être analysées et les têtes de maintien et de centrage (24.1, 24.2) étant tournées d'au moins 360° autour de l'axe de rotation (DA) à l'aide des entraînements tournants (10.1, 10.2) synchronisés l'un par rapport à l'autre sous l'effet de la force de traction ou de la force de compression, avec détection de la force de traction ou de la force de compression.

10. Procédé CT selon la revendication 9, **caractérisé en ce que** la rotation synchronisée des têtes de maintien et de centrage (24.1, 24.2) se produit à des pas angulaires inférieurs à 0,18°, idéalement inférieurs à 0,1°.

11. Procédé CT selon la revendication 9 ou 10, **caractérisé en ce que** l'unité de détection et de transmission (35) du dispositif CT comprend un câble de transmission directe de données de la position angulaire de rotation du support d'échantillon (33) ou de son entraînement (36) ou se compose de ceux-ci.

12. Procédé CT selon l'une quelconque des revendications 9 à 11, **caractérisé en ce que** l'échantillon de matière (9) est tordu lors de la rotation par le biais des entraînements tournants (10.1, 10.2) synchronisés, seule étant marquée une force de torsion ou seule étant marquée pour l'essentiel une force de torsion s'exerçant sur l'échantillon de matière (9) et la force de torsion étant détectée.

13. Procédé CT selon la revendication 9 ou 12, **caractérisé en ce que** l'échantillon de matière (9) est en outre tordu en cas de rotation au travers des entraînements tournants (10.1, 10.2) synchronisés et la force de torsion étant également détectée.
